# FASCICULE DE BREVET EUROPEEN

(11) **EP 3 784 524 B1**
(45) Date de publication et mention de la délivrance du brevet: **06.04.2022**
(21) Numéro de dépôt: 19719888.0
(22) Date de dépôt: 26.04.2019
(51) Int. Cl.: B60N 2/874, B60N 2/90

(54) **APPUI-TÊTE DE SIÈGE DE VÉHICULE AUTOMOBILE**
KOPFSTÜTZE FÜR EINEN KRAFTFAHRZEUGSITZ
HEADREST FOR A MOTOR VEHICLE SEAT

(30) Priorité: 26.04.2018 FR 1853697
(43) Date de publication de la demande: 03.03.2021
(73) Titulaire: TESCA France, 75008 Paris (FR)
(72) Inventeur: SOY, Albert, 17170 Amer (ES)
(74) Mandataire: Sayettat, Julien Christian
(86) Numéro de dépôt international: PCT/EP2019/060723
(87) Numéro de publication internationale: WO 2019/207100

(56) Documents cités:
- EP-A1- 2 777 984
- DE-B4- 10 335 517
- DE-C1- 19 835 355
- FR-A1- 2 910 406
- FR-A1- 3 000 923

## Description

L'invention concerne un appui-tête de siège de véhicule automobile.

Il est connu de réaliser dans le document EP-A-2 777 984 un appui-tête de siège de véhicule automobile, ledit appui-tête comprenant :
- une armature métallique de liaison à un dossier dudit siège,
- un boitier en matériau plastique moulé d'absorption d'énergie en cas de choc de la tête d'un passager sur ledit appui-tête, ledit boitier étant monté rotatif par rapport à ladite armature autour d'un axe transversal, de manière à pouvoir passer d'une position relevée d'utilisation à une position rabattue d'escamotage,
- un coussin de garnissage dudit boitier,
- un dispositif de verrouillage dudit boitier en position relevée,
- un premier moyen ressort d'actionnement dudit boitier vers sa position rabattue quand ledit dispositif est désactivé.

Le fait de pouvoir amener le boitier en position rabattue permet notamment de libérer la vision vers l'arrière quand le siège correspondant n'est pas occupé, et éventuellement, lorsque l'on réalise une position rabattue vers l'avant, de créer une gêne obligeant l'occupant à placer ledit boitier en position d'utilisation.

On rappelle ici qu'un solénoïde est une bobine allongée constituée par un fil conducteur enroulé qui crée sur son axe un champ magnétique quand il est parcouru par un courant.

Selon des réalisations connues, le solénoïde est alimenté par un générateur extérieur à l'appui-tête.

Dans des réalisations connues, le solénoïde est couplé à la traverse par l'intermédiaire d'un barreau métallique coulissant dedans, ledit barreau étant relié à ladite traverse, par exemple par l'intermédiaire d'une bielle.

Un tel agencement est complexe et requiert un espace important difficile à dégager à l'intérieur du boitier de l'appui-tête.

L'invention a pour but de pallier ces inconvénients.

A cet effet, l'invention propose un appui-tête de siège de véhicule automobile, ledit appui-tête comprenant :
- une armature métallique de liaison à un dossier dudit siège,
- un boitier en matériau plastique moulé d'absorption d'énergie en cas de choc de la tête d'un passager sur ledit appui-tête, ledit boitier étant monté rotatif par rapport à ladite armature autour d'un axe transversal, de manière à pouvoir passer d'une position relevée d'utilisation à une position rabattue d'escamotage,
- un coussin de garnissage dudit boitier,
- un dispositif de verrouillage dudit boitier en position relevée,
- un premier moyen ressort d'actionnement dudit boitier vers sa position rabattue quand ledit dispositif est désactivé,
   ledit dispositif comprenant :
- une traverse de verrouillage s'étendant transversalement et étant montée en coulissement transversal dans ledit boitier, de manière à pouvoir passer d'une position de verrouillage à une position de déverrouillage, ladite traverse étant solidaire d'un moyen de verrouillage,
- un moyen de verrouillage réciproque solidaire de ladite armature et coopérant avec ledit moyen de verrouillage pour maintenir ledit boitier en position relevée,
- un deuxième moyen ressort d'actionnement de ladite traverse vers sa position de verrouillage,
- un solénoïde d'actionnement de ladite traverse en position de déverrouillage, ledit solénoïde étant monté dans ledit boitier,
   ledit appui-tête présentant en outre les caractéristiques suivantes :
- ladite traverse est à base de métal attirable par un aimant,
- ladite traverse est montée de manière à traverser l'intérieur dudit solénoïde et à pouvoir coulisser dedans,
- les bornes d'alimentation électrique dudit solénoïde sont définies de sorte que ladite traverse adopte :
   ∘ sa position de verrouillage en l'absence d'alimentation sous l'effet dudit deuxième moyen ressort,
   ∘ sa position de déverrouillage en présence d'alimentation, à l'encontre dudit deuxième moyen ressort.

Dans cette description, les termes de positionnement dans l'espace (supérieur, transversal, latéral, avant, vertical,...) sont pris en référence à l'appui-tête disposé en situation d'utilisation dans le véhicule.

L'agencement proposé permet de :
- simplifier l'appui-tête puisque le solénoïde est couplé directement à la traverse le traversant, par attraction magnétique, sans intervention de composant intermédiaire tel qu'une bielle,
- gagner de l'espace à l'intérieur du boitier d'appui-tête.

D'autres particularités et avantages de l'invention apparaîtront dans la description qui suit, faite en référence aux figures jointes, dans lesquelles :

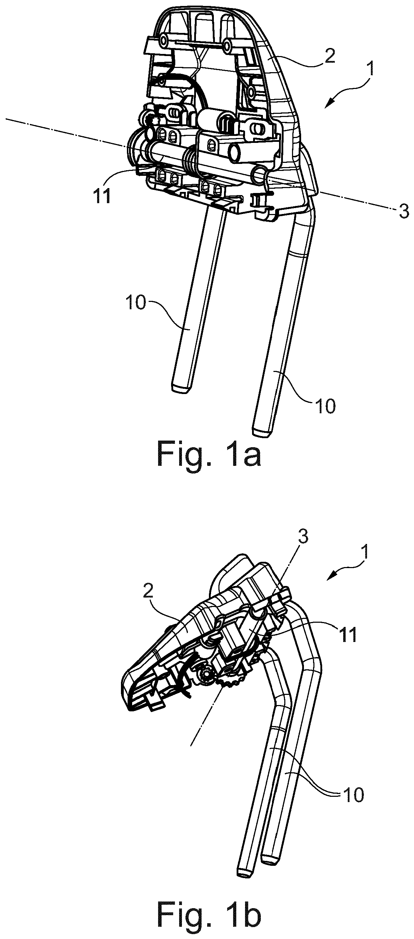

- les figures 1a et 1b sont des vues en perspective schématique partielle d'un appui-tête selon une réalisation, le boitier étant en position relevée (figure 1a) et rabattue (figure 1b),

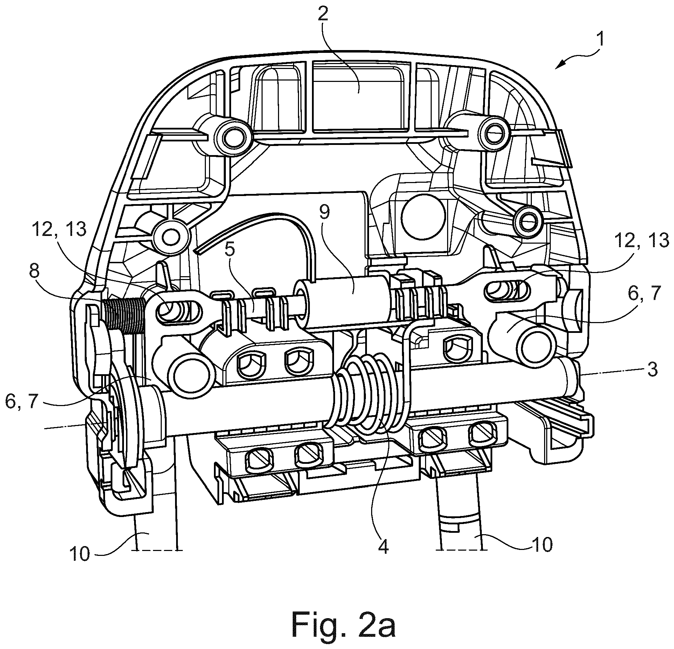

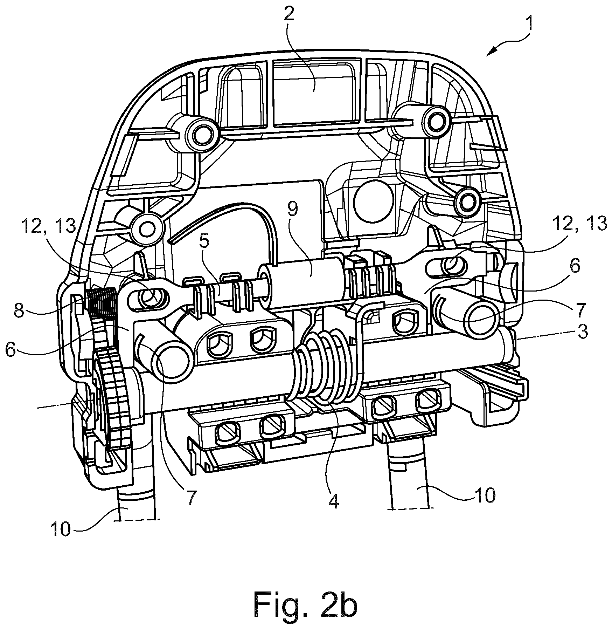

- les figures 2a et 2b sont des vues analogues à la figure 1a, sous un angle de vue différent, la traverse de verrouillage étant en position de verrouillage (figure 2a) et en position de déverrouillage (figure 2b),

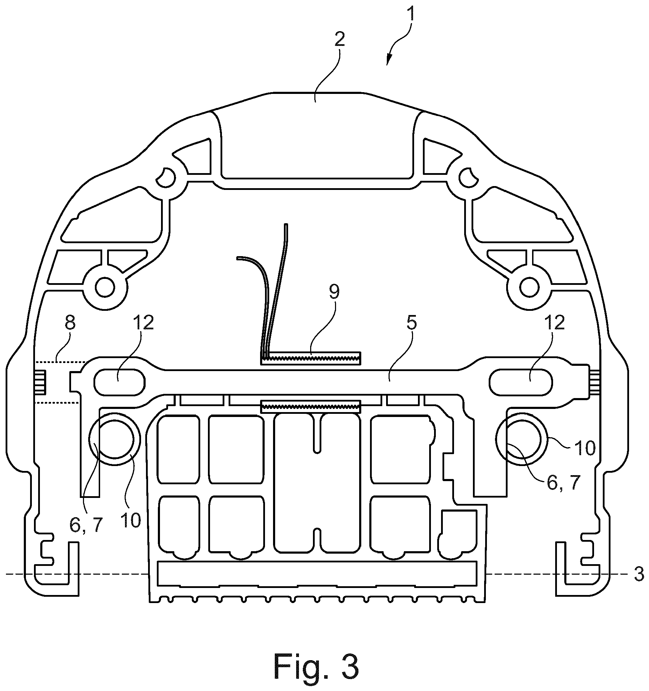

- la figure 3 est une vue en coupe verticale correspondant à la figure 2a.

En référence aux figures, on décrit un appui-tête 1 de siège de véhicule automobile, ledit appui-tête comprenant :
- une armature métallique de liaison à un dossier dudit siège,
- un boitier 2 en matériau plastique moulé d'absorption d'énergie en cas de choc de la tête d'un passager sur ledit appui-tête, ledit boitier étant monté rotatif par rapport à ladite armature autour d'un axe transversal 3, de manière à pouvoir passer d'une position relevée d'utilisation à une position rabattue d'escamotage,
- un coussin, non représenté, de garnissage dudit boitier,
- un dispositif de verrouillage dudit boitier en position relevée,
- un premier moyen ressort 4 d'actionnement dudit boitier vers sa position rabattue quand ledit dispositif est désactivé,
   ledit dispositif comprenant :
- une traverse 5 de verrouillage s'étendant transversalement et étant montée en coulissement transversal dans ledit boitier, de manière à pouvoir passer d'une position de verrouillage à une position de

déverrouillage, ladite traverse étant solidaire d'un moyen de verrouillage 6,
- un moyen de verrouillage réciproque 7 solidaire de ladite armature et coopérant avec ledit moyen de verrouillage pour maintenir ledit boitier en position relevée,
- un deuxième moyen ressort 8 d'actionnement de ladite traverse vers sa position de verrouillage,
- un solénoïde 9 d'actionnement de ladite traverse en position de déverrouillage, ledit solénoïde étant monté dans ledit boitier,
   ledit appui-tête présentant en outre les caractéristiques suivantes :
- ladite traverse est à base de métal attirable par un aimant,
- ladite traverse est montée de manière à traverser l'intérieur dudit solénoïde et à pouvoir coulisser dedans,
- les bornes d'alimentation électrique, non représentées, dudit solénoïde sont définies de sorte que ladite traverse adopte :
   ∘ sa position de verrouillage en l'absence d'alimentation sous l'effet dudit deuxième moyen ressort,
   ∘ sa position de déverrouillage en présence d'alimentation, à l'encontre dudit deuxième moyen ressort.

Selon la réalisation représentée, l'armature présente :
- deux branches 10 parallèles de montage sur un dossier du siège, les parties supérieures desdites branches étant pourvues chacune d'un cran respectif, lesdits crans formant moyen de verrouillage réciproque 7,
- une entretoise 11 transversale reliant lesdites parties supérieures, ladite entretoise s'étendant selon l'axe transversal 3,
la traverse 5 étant pourvue de deux saillies formant moyen de verrouillage 6, lesdites saillies s'insérant respectivement dans chacun desdits crans quand ladite traverse est en position de verrouillage.

Selon la réalisation représentée, la partie supérieure des branches 10 est recourbée vers l'avant.

Selon la réalisation représentée, les crans 7 sont disposés latéralement sur les branches 10, les saillies 6 étant orientées verticalement.

Selon la réalisation représentée, la traverse 5 s'inscrit sensiblement dans une plaque plane, ladite traverse comprenant deux lumières 12 latérales allongées transversalement, lesdites lumières étant traversées par deux tiges 13 de fixation au boitier 2, lesdites lumières étant agencées de manière à permettre un débattement transversal de ladite traverse entre ses positions de verrouillage et de déverrouillage.

Selon la réalisation représentée, le premier moyen ressort 4 est sous forme d'un ressort en hélice monté autour de l'entretoise 11.

Selon la réalisation représentée, le deuxième moyen ressort 8 est sous forme d'un ressort en hélice dans l'alignement de la traverse 5.

## Revendications

1. Appui-tête (1) de siège de véhicule automobile, ledit appui-tête comprenant :
• une armature métallique de liaison à un dossier dudit siège,
• un boitier (2) en matériau plastique moulé d'absorption d'énergie en cas de choc de la tête d'un passager sur ledit appui-tête, ledit boitier étant monté rotatif par rapport à ladite armature autour d'un axe transversal (3), de manière à pouvoir passer d'une position relevée d'utilisation à une position rabattue d'escamotage,
• un coussin de garnissage dudit boitier,
• un dispositif de verrouillage dudit boitier en position relevée,
• un premier moyen ressort (4) d'actionnement dudit boitier vers sa position rabattue quand ledit dispositif est désactivé,
ledit appui-tête étant **caractérisé par**:
• une traverse (5) de verrouillage s'étendant transversalement et étant montée en coulissement transversal dans ledit boitier, de manière à pouvoir passer d'une position de verrouillage à une position de déverrouillage, ladite traverse étant solidaire d'un moyen de verrouillage (6),
• un moyen de verrouillage réciproque (7) solidaire de ladite armature et coopérant avec ledit moyen de verrouillage pour maintenir ledit boitier en position relevée,
• un deuxième moyen ressort (8) d'actionnement de ladite traverse vers sa position de verrouillage,
• un solénoïde (9) d'actionnement de ladite traverse en position de déverrouillage, ledit solénoïde étant monté dans ledit boitier, et en ce que :
• ladite traverse est à base de métal attirable par un aimant,
• ladite traverse est montée de manière à traverser l'intérieur dudit solénoïde et à pouvoir coulisser dedans,
• les bornes d'alimentation électrique dudit solénoïde sont définies de sorte que ladite traverse adopte :
∘ sa position de verrouillage en l'absence d'alimentation sous l'effet dudit deuxième moyen ressort,
∘ sa position de déverrouillage en présence d'alimentation, à l'encontre dudit deuxième moyen ressort.

2. Appui-tête selon la revendication 1, **caractérisé en ce que** l'armature présente :
• deux branches (10) parallèles de montage sur un dossier du siège, les parties supérieures desdites branches étant pourvues chacune d'un cran respectif, lesdits crans formant moyen de verrouillage réciproque (7),
• une entretoise (11) transversale reliant lesdites parties supérieures, ladite entretoise s'étendant selon l'axe transversal (3),
la traverse étant pourvue de deux saillies formant moyen de verrouillage (6), lesdites saillies s'insérant respectivement dans chacun desdits crans quand ladite traverse est en position de verrouillage.

3. Appui-tête selon la revendication 2, **caractérisé en ce que** la partie supérieure des branches (10) est recourbée vers l'avant.

4. Appui-tête selon la revendication 3, **caractérisé en ce que** les crans (7) sont disposés latéralement sur les branches (10), les saillies (6) étant orientées verticalement.

5. Appui-tête selon l'une quelconque des revendications 2 à 4, **caractérisé en ce que** le premier moyen ressort (4) est sous forme d'un ressort en hélice monté autour de l'entretoise (11).

6. Appui-tête selon l'une quelconque des revendications 1 à 5, **caractérisé en ce que** le deuxième moyen ressort (8) est sous forme d'un ressort en hélice dans l'alignement de la traverse (5).

## Patentansprüche

1. Kopfstütze (1) für einen Kraftfahrzeugsitz, wobei die Kopfstütze umfasst:
- ein Metallgestänge zur Verbindung mit einer Rückenlehne des Sitzes,
- ein Gehäuse (2) aus geformtem Kunststoffmaterial zum Absorbieren von Energie im Falle eines Aufpralls des Kopfes eines Insassen auf die Kopfstütze, wobei das Gehäuse in Bezug auf das Gestänge um eine Querachse (3) drehbar angebracht ist, sodass es von einer hochgeklappten Gebrauchsstellung in eine heruntergeklappte Versenkstellung wechseln kann,
- ein Polster zur Verkleidung des Gehäuses,
- eine Vorrichtung zum Verriegeln des Gehäuses in der hochgeklappten Stellung,
- ein erstes Federmittel (4) zum Bewegen des Gehäuses in seine heruntergeklappte Stellung, wenn die Vorrichtung deaktiviert ist,
wobei die Kopfstütze **gekennzeichnet ist durch**:
- eine Verriegelungsquerstange (5), die sich in Querrichtung erstreckt und in dem Gehäuse in Querrichtung verschiebbar angebracht ist, sodass sie von einer Verriegelungsstellung in eine Entriegelungsstellung wechseln kann, wobei die Querstange fest mit einem Verriegelungsmittel (6) verbunden ist,
- ein Mittel zum gegenseitigen Verriegeln (7), das fest mit dem Gestänge verbunden ist und mit dem Verriegelungsmittel zusammenwirkt, um das Gehäuse in der hochgeklappten Stellung zu halten,
- ein zweites Federmittel (8) zum Bewegen der Querstange in ihre Verriegelungsstellung,
- eine Zylinderspule (9) zum Bewegen der Querstange in die Entriegelungsstellung, wobei die Zylinderspule in dem Gehäuse angebracht ist,
und dadurch, dass:
- die Querstange auf einem Metall basiert, das von einem Magneten angezogen werden kann,
- die Querstange so angebracht ist, dass sie **durch** das Innere der Zylinderspule verläuft und sich in dieser verschieben kann,
- die elektrischen Versorgungsanschlüsse der Zylinderspule so definiert sind, dass die Querstange:
-- bei Fehlen der Versorgung unter Wirkung des zweiten Federmittels ihre Verriegelungsstellung,
-- bei Anliegen der Versorgung entgegen des zweiten Federmittels ihre Entriegelungsstellung
einnimmt.

2. Kopfstütze nach Anspruch 1, **dadurch gekennzeichnet, dass** das Gestänge aufweist:
- zwei parallele Streben (10) zum Anbringen an einer Rückenlehne des Sitzes, wobei die oberen Teile der Streben jeweils mit einer jeweiligen Kerbe versehen sind, wobei die Kerben ein Mittel zur gegenseitigen Verriegelung (7) bilden,
- einen Quersteg (11), der die oberen Teile miteinander verbindet, wobei sich der Steg entlang der Querachse (3) erstreckt,
wobei die Querstange mit zwei Vorsprüngen versehen ist, die ein Verriegelungsmittel (6) bilden, wobei sich die Vorsprünge jeweils in jede der Kerben einfügen, wenn sich die Querstange in der Verriegelungsstellung befindet.

3. Kopfstütze nach Anspruch 2, **dadurch gekennzeichnet, dass** der obere Teil der Streben (10) nach vorne gebogen ist.

4. Kopfstütze nach Anspruch 3, **dadurch gekennzeichnet, dass** die Kerben (7) seitlich an den Streben (10) angeordnet sind, wobei die Vorsprünge (6) vertikal ausgerichtet sind.

5. Kopfstütze nach einem der Ansprüche 2 bis 4, **dadurch gekennzeichnet, dass** das erste Federmittel (4) in Form einer Schraubenfeder vorliegt, die um den Steg (11) herum angebracht ist.

6. Kopfstütze nach einem der Ansprüche 1 bis 5, **dadurch gekennzeichnet, dass** das zweite Federmittel (8) in Form einer Schraubenfeder in Flucht mit der Querstange (5) vorliegt.

## Claims

1. Headrest (1) for a motor vehicle seat, said headrest comprising:
• a metal frame for connection to a backrest of said seat,
• a housing (2) of moulded plastic material for absorbing energy in the event of an impact of a passenger's head on said headrest, said housing being rotatably mounted in relation to said frame about a transverse axis (3) so as to be able to move from a raised position of use to a folded position of retraction,
• a padded cushion of said housing,
• a device for locking said housing in a raised position,
• a first spring means (4) for actuating said housing towards its folded position when said device is disabled, said headrest being **characterised by**:
• a locking crosspiece (5) extending transversely and being transversely slidably mounted in said housing such as to be able to move from a locking position to an unlocking position, said crosspiece being integral with a locking means (6),
• a reciprocal locking means (7) integral with said frame and cooperating with said locking means to maintain said housing in a raised position,
• a second spring means (8) for actuating said crosspiece towards its locking position,
• a solenoid (9) for actuating said crosspiece to an unlocking position, said solenoid being mounted in said housing, and in that:
• said crosspiece is made of metal, which can be attracted by a magnet,
• said crosspiece is mounted so as to pass through the inside of said solenoid and to be able to slide therein,
• the power supply terminals of said solenoid are defined such that said crosspiece assumes:
-- its locking position in the absence of power under the effect of said second spring means,
-- its unlocking position in the presence of power, against said second spring means.

2. Headrest according to claim 1, **characterised in that** the frame has:
• two parallel arms (10) for mounting on a backrest of the seat, the upper parts of said arms each being provided with a respective notch, said notches forming a reciprocal locking means (7),
• a transverse spacer (11) connecting said upper parts, said spacer extending along the transverse axis (3),
the crosspiece being provided with two projections forming a locking means (6), said projections being respectively inserted into each of said notches when said crosspiece is in a locking position.

3. Headrest according to claim 2, **characterised in that** the upper part of the arms (10) is bent forwards.

4. Headrest according to claim 3, **characterised in that** the notches (7) are arranged laterally on the arms (10), the projections (6) being oriented vertically.

5. Headrest according to any one of claims 2 to 4, **characterised in that** the first spring means (4) is in the form of a helical spring mounted around the spacer (11).

6. Headrest according to any one of claims 1 to 5, **characterised in that** the second spring means (8) is in the form of a helical spring in alignment with the crosspiece (5).
